# EUROPEAN PATENT APPLICATION

(11) **EP 4 831 758 A1**
(43) Date of publication of application: **28.10.2026**
(21) Application number: 25171687.4
(22) Date of filing: 22.04.2025
(51) Int. Cl.: G05B 23/02

(54) **DEVICE AND METHOD FOR ESTIMATING A LIFETIME INDICATOR OF A MACHINE**

(71) Applicant: Robert Bosch GmbH, 70442 Stuttgart (DE)
(72) Inventor: Ravishankar, Apoorva, 70469 Stuttgart-Feuerbach (DE); Oencel, Oezguer, 70469 Stuttgart (DE)

(57) **Abstract**

According to various embodiments, a method for estimating a lifetime indicator of a machine performing a given manufacturing process is provided, comprising generating training time series of health indices specifying a health of the respective machine, determining ranges of health indices representing different degradation levels and one or more thresholds between one or more pairs of the degradation levels including a threshold representing end of useful life, training a health index prediction model to extend time series of health indices into the future using the generated training time series of health indices as historic data and estimating, for a machine performing the manufacturing process, the lifetime indicator of the machine using the prediction model and the one or more thresholds.

## Description

The present disclosure relates to devices and methods for estimating a lifetime indicator of a machine.

Manufacturing is one of the major industries where data-driven techniques are widely being used. The development of modern manufacturing processes increasingly depends on data-based decision-making to improve efficiency, minimize downtime, and optimize maintenance. For example, predictive maintenance (PdM), which aims to predict machine failures in advance, typically by estimating remaining useful life (RUL) or another lifetime indicator of the machine tools, and recommending timely actions for the machine operators & production line managers has become increasingly popular in smart manufacturing, as financial benefits of such predictive actions can be substantial.

However, current PdM solutions often struggle with scalability (i.e. the possibility to apply them to different types of machines and sensors), making customized setups for various machine configurations a requirement, or they heavily depend on labelled data, which is often limited in practice. Accordingly, approaches for efficient and flexible RUL estimation are desirable.

According to various embodiments, a method for estimating a lifetime indicator of a machine performing a given manufacturing process is provided, comprising:
- Receiving historic data which includes at least one historic data time series, which is a time series of sensor data collected when performing the manufacturing process;
- Applying an anomaly detector to at least one historic data time series of the historic data and generating a training time series of health indices specifying a health of the respective machine from anomaly detection results of the anomaly detector using a health index generator;
- Determining ranges of health indices representing different degradation levels and one or more thresholds between one or more pairs of the degradation levels including a threshold representing end of useful life;
- Training a health index prediction model to extend time series of health indices into the future using the generated training time series of health indices as training data;
- Estimating, for a machine performing the manufacturing process, the lifetime indicator of the machine from a time series of sensor data collected in the operation of the machine, by
   ∘ generating a time series of health indices for the machine from the time series of sensor data collected in the operation of the machine by applying the anomaly detector to the time series of sensor data collected in the operation of the machine and by using the health index generator;
   ∘ extending the time series of health indices for the machine into the future using the trained health index prediction model; and
   ∘ determining a lifetime indicator estimate for the machine from a point in time when the extended time series of health indices for the machine reaches the threshold representing end of useful life.

The method described above allows predictive maintenance with scalability across different sensor types and machines: it is only required to have time series sensor data. The number of sensors and manufacturing conditions are flexible. Scalability is enabled by tracking abnormal behaviour and learning to label health degradation, dynamically detecting thresholds and making predictions. Missing labels or failure in data can be handled in a robust manner: the method can operate with unlabelled data, under conditions where no failure data is available. In complete unsupervised conditions, noise injection can be implemented based on the nature of the underlying data to train the model by mimicking failure situations. The method performs a predication of a lifetime indicator, such as a RUL (remaining useful life), TTF (time to failure), half-life or 90 % life time, by a combination of individual, modular blocks that have their individual clear goals (anomaly detector, health index generator etc.). This promotes interpretability. The modular nature of the resulting framework also allows possible adjustments to it, exchanging certain modules, making additions and adjustments possible and efficient (i.e. makes it scalable).

In the following, various examples are given.

Example 1 is a method for estimating a lifetime indicator of a machine as described above.

Example 2 is the method of example 1, comprising determining the ranges of health indices representing different degradation levels from the generated time series of health indices by applying a machine learning clustering model.

This allows defining degradation thresholds without the necessity of historic data time series labelled with the different degradation levels.

Example 3 is the method of example 1 or 2, comprising generating historic data time series of the historic data by injecting noise representative of degradation into time series of sensor data collected in the operation of a respective machine performing the given manufacturing process.

So, if time series data in the historic data do not show degradation, the historic data can be augmented with noise injected which alters the sensor data as if degradation had taken place in the operation of the respective machine.

Example 4 is the method of any one of examples 1 to 3, wherein the health index generator generates the health indices by changing (e.g. reducing) an initial health index representing a healthy machine over time (i.e. for each time index of the respective time series) depending on the anomaly detection results.

The health indices thus indicate a machine to be healthy in the beginning and its health to degrade monotonically. Each detected anomaly is taken as an indication that health has degraded.

Example 5 is the method of example 4, wherein the health index generator comprises a first neural network processing an anomaly detection result of the anomaly detection for a current time index and a second neural network processing anomaly detection results of the anomaly detection averaged over a predetermined window of time indices, combining outputs of the first neural network and the second neural network and determining a value of the health index for the current time index by changing (e.g. reducing) a value of the health index from a preceding time index by a result of the combination.

Example 6 is the method of example 5, comprising training the health index generator by training the first neural network and the second neural network using a loss function including at least one of a penalty for deviations between subsequent health indices and health indices close to a health index representing maximum degradation (e.g. 0).

The first loss component ensures stability of the health indices and the second loss component ensures that health index only show high degradation if there really is significant degradation.

Example 7 is the method of any one of examples 1 to 6, wherein the anomaly detector includes an auto-encoder and the results of the anomaly detector comprise reconstruction errors of the auto-encoder.

This allows efficient anomaly detection and anomaly detection results which can be efficiently processed further (by the health index generator for generation of health indices). Further, the anomaly detector can be trained by usual training of the autoencoder (e.g. based on sensor data time series of healthy machines).

Example 8 is a method of example 8, wherein the auto-encoder is a temporal convolutional network auto encoder or a Long Short-Term Memory autoencoder.

This allows efficient handling of multivariate data (with a temporal convolutional network auto encoder) as well as univariate data (with a Long Short-Term Memory autoencoder).

Example 9 is a method for controlling a machine comprising estimating a lifetime indicator of the machine according to any one of examples 1 to 8 and applying a maintenance action to the machine depending on the estimated lifetime indicator.

Example 10 is a data processing system (in particular a machine controller), configured to perform a method of any one of examples 1 to 9.

Example 11 is a computer program comprising instructions which, when executed by a computer, makes the computer perform a method according to any one of examples 1 to 9.

Example 12 is a computer-readable medium comprising instructions which, when executed by a computer, makes the computer perform a method according to any one of examples 1 to 9.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a winding machine as an example of a manufacturing machine.
- Figure 2: illustrates a training pipeline for a PdM (Predictive Maintenance) model, or, in other words, a RUL (remaining useful life) estimator, according to an embodiment.
- Figure 3: illustrates usage of a PdM model trained according to figure 2.
- Figure 4: illustrates Gaussian noise and drift noise.
- Figure 5: illustrates a VHI (virtual health index) generator.
- Figure 6: shows an example of VHI boundaries between four degradation levels.
- Figure 7: shows a flow diagram illustrating a method for estimating a lifetime indicator of a machine performing a given manufacturing process according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

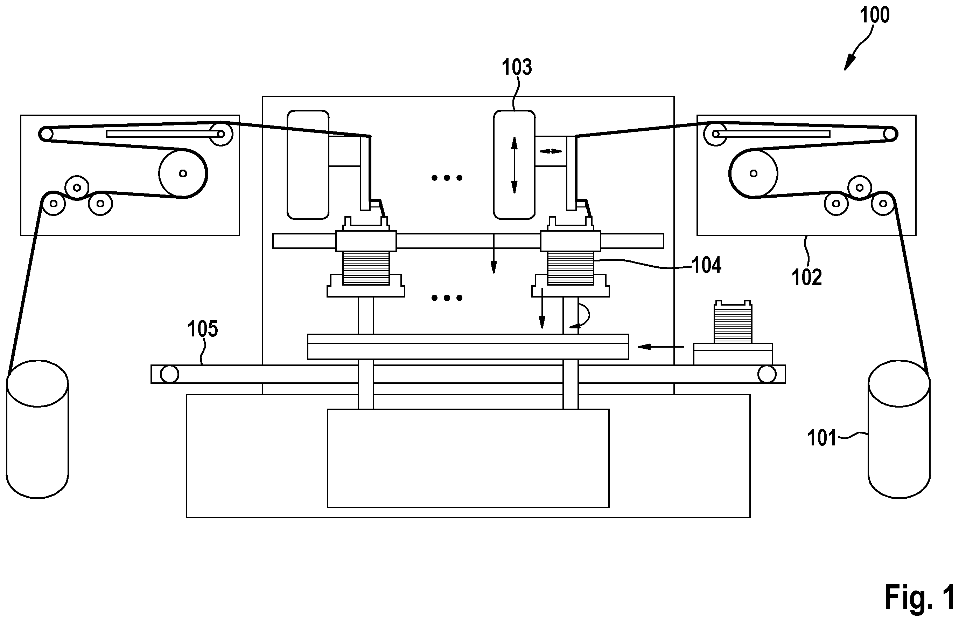

Figure 1 shows a winding machine 100 as an example of a manufacturing machine.

The winding machine 100 performs a winding process. A winding machine uses copper wire from a source of wire 101 provided via a wire tensioner 102 to a winding unit 103 which winds the wire around a stator 104 transported by a conveyor platform 105 . The winding machine typically has a second phase which is the "connecting" phase. Once copper wire has been wound around the stator (which has room for multiple stator coils) for a given stator coil, the conveyor platform 105 performs a rotatory movement of the stator. This movement positions the next free stator coil slot under the needle to start the next winding phase for that stator.

For efficient operation of a manufacturing plant, maintenance of machines such as the winding machine described above needs to be performed. Predictive maintenance (PdM) is highly desirable because it allows for the early detection of potential equipment failures, reducing the likelihood of unexpected breakdowns. By using data and advanced analytics to predict when maintenance should be performed, manufacturers can schedule repairs at convenient times, minimizing downtime and avoiding costly disruptions. This proactive approach not only extends the lifespan of machinery but also enhances safety, efficiency, and overall productivity. Additionally, predictive maintenance can lead to significant cost savings by preventing major repairs and optimizing the use of resources.

However, many manufacturing plants and processes require a large number of different machine types, all of which may have their individual maintenance requirements. A PdM framework is therefore desirable which can be flexibly adapted to different machine types and sensor data.

In view of the above, a scalable approach for PdM (in particular a RUL estimator) is provided that can be applied to a variety of machines and (e.g. sensor) data structures with minimal customization. The PdM involves estimating the RUL of a machine, i.e. estimating the length of time the machine will operate before it requires repair or replacement. In other words, estimating the RUL can be understood as predicting when the machine requires repair or replacement. Quality and availability of historic failure data can be used to improve such a prediction but is not a necessity to obtain a reliable prediction in the framework provided.

According to various embodiments, the PdM approach provided uses a machine learning PdM model having an architecture, that processes time series data collected from sensors and by feeding them into various neural network layers.

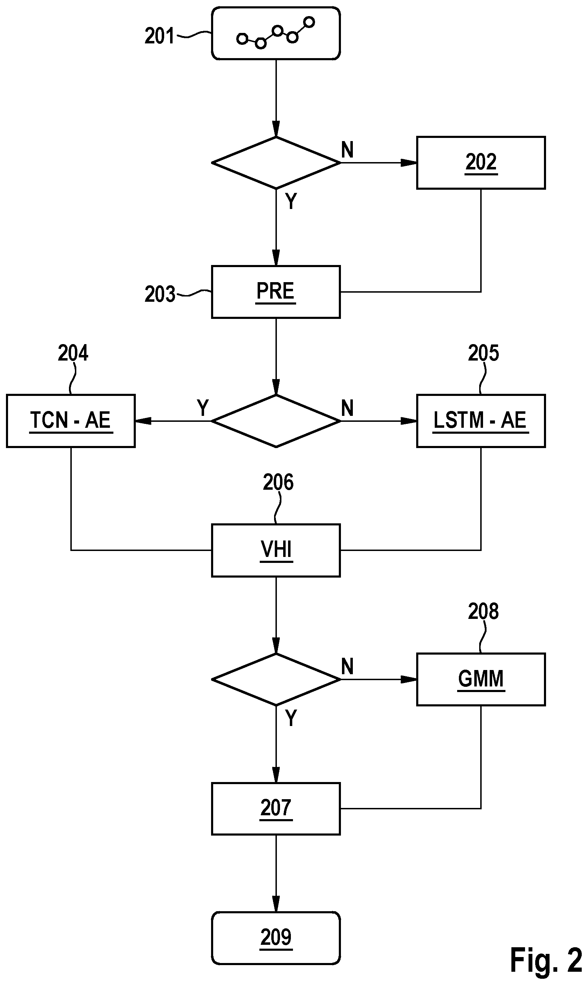

Figure 2 illustrates a training pipeline for a PdM model or, in other words, a RUL (remaining useful life) estimator, according to an embodiment.

For training the PdM architecture for PdM for a machine performing a given manufacturing process (e.g. winding), a set of time series of sensor data collected from operating one or more machines performing the manufacturing process is input as historic data 201 (i.e. each time series is a time series of sensor data from operating a machine performing the manufacturing process; it should be noted that this may be the same machine as that for which RUL should be predicted).

For time series of the historic data for which no degradation is observable noise may be injected in 202 to add historic data time series with degradation. The historic data may be pre-processed in 203 (e.g. normalizing sensor values etc.).

Then, patterns are identified and anomalies are detected in the time series of the historic data. Anomaly detection is for example done based on a reconstruction error of temporal convolutional network auto encoder 204 (in case the sensor data is multivariate) based on a reconstruction error of long short-term memory auto encoder 205 (in case the sensor data is univariate). These autoencoders of course are also trained from scratch, e.g. by using sensor data right after major maintenances, assuming the healthiest state. This way, the autoencoders can learn what is "normal". During their use for anomaly detection, deviation quantities are recorded as reconstruction errors, thus indicating anomalies.

This is followed by, for each time series in the historic data, creation of health labels for all the time stamps (i.e. time indices) of the time series in 206. The creation of health labels follows a Virtual Health Index (VHI) concept and is performed by a VHI generator, allowing the quantification of degradation in the machinery. Once the health labels are generated for the time series of the historic data (i.e. a corresponding time series of health labels has been generated for each time series of sensor data), the next processing step is to define thresholds of various degradation levels in 207, including a Remaining Useful Life (RUL) boundary (i.e. threshold). If historic failure data is not available (i.e. the historic data does not contain time series of machines that actually failed during collection of the historic data), an unsupervised clustering algorithm 208 (e.g. a Gaussian mixture model) is used to extract the degradation boundaries.

In 209, a VHI prediction model (herein also simply referred to as "prediction model") is trained to extend series of health labels into the future based on the time series of health labels generated for the time series of the historic data. This training can be done by presenting a VHI prediction model with a portion of a the time series of health labels generated for a time series of the historic data and training it to complete the time series of health labels.

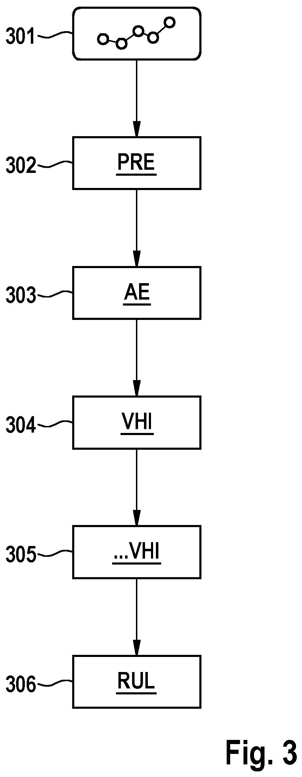

Figure 3 illustrates usage of a PdM model (also referred to as inference pipeline) trained according to figure 2.

For a machine for which the RUL is to be estimated (i.e. PdM is to be performed), the time series of sensor data up to the current point of time of operation 301 is converted into a series of health labels by data preprocessing 302, anomaly detection (i.e. reconstruction error determination) 303 and health label generation 304 (corresponding to 203, anomaly detection with either the autoencoder 204 or 205 used in the training and application of the VHI generator in 206). This series of health labels is then extended into the future using the trained VHI prediction model in 305 .

Whenever the extended series of health labels reaches the RUL threshold, the time difference until then is presented as the final output PdM architecture in 306. This is the estimated RUL value. An important feature of this framework is its adaptability: the PdM architecture can function with minimal human involvement and work with both labelled and unlabelled data. According to various embodiments, the framework combines Long Short-Term Memory (LSTM) autoencoders (AEs), Temporal Convolutional Network (TCNs) AEs, and hybrid models to develop a reliable framework for VHI generation and RUL estimation for machines.

Details of the PdM model (or framework), in particular with regard to its training (as illustrated in figure 2) and usage of it for RUL estimation (as illustrated in figure 3) are given in the following.

The sensor data in case of a winding machine as described with reference to figure 1 are for example acceleration changes of the winding needle as it moves up and down. However, the sensor data may also include force measurements (e.g. a force applied to the wire).

Noise injection 202 may be done due to the lack of historic failures in the historic data. Time series with injected noise may be included into the historic data in addition to the original historic data. For example, the PdM model utilizes healthy data for the training of the anomaly detection components compromising of autoencoders, addition of noise injection allows training of the VHI Generator, allowing functioning of PdM even under sparse data conditions, e.g. new machinery or very limited data. Noise injection happens with respect to the time series, mimicking chronological degradation. Therefore, in such cases, noise injection can be thought as subsection of the healthy data from latest sections, appended to the earlier health parts.

Examples for noise that is injected into the time series of the training (at least for some that do not show degradation) include drift noise and gaussian noise.

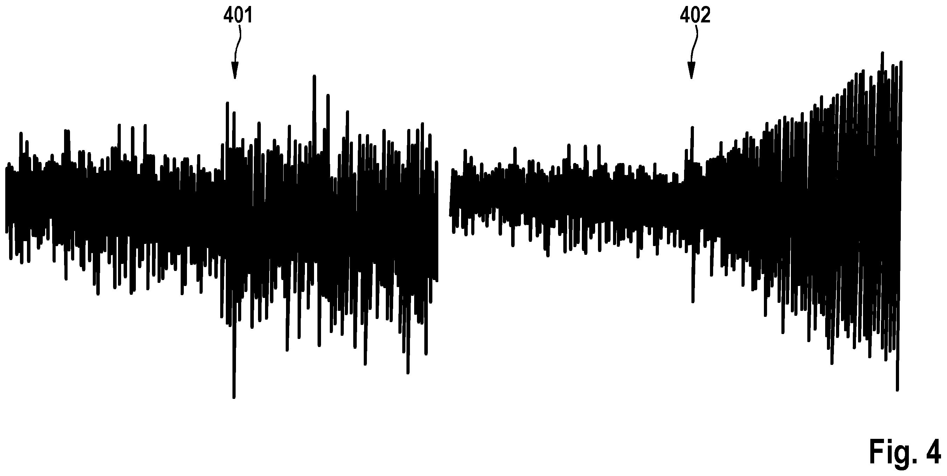

Figure 4 illustrates Gaussian noise 401 and drift noise 402 (e.g. as applied to a time series of acceleration measurements).

Gaussian noise adds random noise following a normal distribution, causing random, but mostly small fluctuations. Drifting noise adds gradual changes, which get larger over time, creating a trend. It therefore allows slow, continuous change in data values, effectively mimicking gradual wear or degradation in wear which may better reflect the degradation of machinery and may thus be used. For example, in case of a winding machine, acceleration values typically get larger as machine degradation increases.

For anomaly detection, as described above, the framework includes two variants: an autoencoder 204 having TCN layers or an autoencoder having LSTM layers. This allows making use of LSTM-based AE in univariate cases and TCN-AE in multivariate cases, due to better spatial feature extraction.

A reason of using an LSTM-based AE 205 is due to its superior performance in capturing temporal information due to the adjustable memory with gates as its control mechanism. In the univariate case, the sensor data comprises a single feature for each timestamp (e.g. an acceleration). These time stamps are grouped in sequences, while the temporal order is kept. The reason for using sequences with LSTMs is simply the constraints that their internal memories have. Although LSTMs are known for their ability to allow long-range temporal relationships with their gating and memory mechanism, the length of timestamps, across which the information is carried over is not unlimited. Though there is not a clear boundary, after a certain number of timestamps, learning capacity in the internal memories become inefficient. This inefficiency typically does not result in an error during the execution of the code but rather tends to show itself in the evaluation of the training process. Therefore, to maximize both the length that the internal memory sees at a time, as well as the learning efficiency, the sequence length may be set to a value such as 200. Another aspect to consider is the computational efficiency of the LSTM layer. Unlike other architectures like CNNs that allow parallel processing of different timestamps, LSTMs process timestamps sequentially. Unfortunately, this does not scale well with increasing size of data. To counter this, batch parallelism may be used. By using an additional parameter called "batch size", the framework allowed controlling the number sequences to process in parallel. Although sequential behaviour remains within individual sequences, the set of sequences are processed in parallel, creating a batch. The weights of the AE network are then updated after each batch. Controlling the batch size properly is therefore of great importance. A large batch size would mean that more data is being processed at once, resulting in fewer weight updates on the network, but in return, a faster training time would be reached. The expected behaviour is reversed if a smaller batch size is used instead. Regarding actual layer setup of the LSTM-AE, layers in both the encoder and decoder parts may be mirrored, in other words, symmetrical, in view of the objective the AE here has: highlighting deviations by exact reconstructions, which is essential for anomaly detection. Stacked LSTM layers may be used in both the encoder and the decoder part in view of the ability to capture both lower and higher-level temporal abilities. Even though this setup may not be necessarily required for less complex use cases, the trade-off between additional computational overhead versus the improved versatility of the proposed architecture may be worth it in view of scalability. Moreover, according to various embodiments, the layers are designed to initially increase the dimension to a user-set value. Through this, the complexity is increased, which is crucial for the underlying network to extract the necessary pattern. Then, the second layer halves the dimension to slowly prepare the data for the upcoming compression in the bottleneck layer, at the end of the encoder part. The decoder then mirrors these steps to obtain the initial input dimensions at the end of the decoder. To guide the training process, MSE (mean squared error) is for example chosen as a metric for reconstruction loss . Thereby, the reconstruction losses between the original and the reconstructed sequences can be tracked, with the goal to minimize them (for healthy time series as historic data). The choice of MSE here is justified, as the penalization of stronger deviations provide additional value, allowing them not to be missed, whereas additional attention is not paid to smaller errors which are potentially mixed with natural noise in the data. To further enhance the power of the model, dropout layers may be included to help combat overfitting and improve generalization. Early stopping may be introduced to help in epoch control.

According to various embodiments, for multivariate sensor data (e.g. including acceleration and force values) a TCN-AE 204 is used as internal memories of LSTM layers are not maximizing the potential of spatial feature extraction in such a case due to a major focus on temporal aspects. The TCN-AE 204 includes one-dimensional convolutional layers to then treat the features as separate channels, allowing the TCN-AE 204 to simultaneously learn patterns across multiple features. By using convolution operations, both temporal patterns within and across features are learned, capturing spatial dependencies over time. As a TCN architecture does not process data sequentially as a LSTM would, runtimes are typically faster, despite increased data size due to multivariate data format. Two important aspects of the TCN-AE 204 are the dilation property of the convolution layers and the causality of the processed sequences. Dilation is a technique that expands the kernel by inserting spaces between its consecutive elements. This enables the TCN-AE 204 to exponentially expand its receptive field with each additional layer, without causing a drastic increase in the number of parameters.

According to various embodiments, dilations start from one and double at each upcoming layer. In other words, the dilation allows the TCN-AE 204 to "look farther back in time" from a given point. Each output point in the sequence depends on a broader historical range of the input. This necessitates comparatively larger sequences than the LSTM-AE 205 in order to avoid underutilizing the dilated layers. Causality on the other refers to ensuring the temporal order while processing the data, by making sure that there is no data leakage from future. This can be achieved by sequence-based batch processing, similar to the one in the LSTM-AE 205. By sequence-based batch processing it is ensured that each sequence (i.e. time series) is limited to its own historical context. Zero-padding can be used to ensure that the output sequence (i.e. the reconstructed time series) maintains the same length as the input sequence of the autoencoder. This becomes especially important with a dilated convolutional layer setup and provides stability in maintaining dimensions, rather than direct impact for causality in the batch parallelism.

According to various embodiments, the encoding layer of the TCN-AE 204 initially has three convolutional layers, each paired with a ReLU activation function. Inside each convolutional layer, input and output channels, kernel size, dilation and padding are set. The input channel is equal to the input size for the first layer. For the following layers, this value is set to the desired of number of filters, which is controlled by the user and remains fixed across subsequent layers. This value is ideally set higher than the initial count of sensors to allow better feature extraction in higher dimensions. Output size remains equal to the number of filters, keeping the dimension throughout the encoding layer. The final component in the encoding layer is a 1x1 convolution operation. While it does not alter the dimensionality, it serves as a refinement layer by applying a linear transformation across the channels. It effectively serves as a "channel mixer" layer, which improves network's ability to capture more complex interactions across features of multivariate data. Similar to the LSTM-AE 205, in the TCN-AE 204, the decoder is symmetrical to the encoder.

The training function is kept similar to the univariate case: MSE is chosen as metric for calculating the loss for training the TCN-AE 204 (based on healthy time series).

Dilated convolutions and parallel processing make the TCN-AE 204 more efficient than the LSTM 205 as it avoids sequential dependencies, enabling faster training and inference. The dilated convolutional layout enables the model to capture both short- and long-term dependencies without increasing computational load. On the other hand, the higher parameter count of multiple convolutional layers could lead to overfitting on smaller datasets. If more layers are desired in the architecture, addition of skip connections can possibly help with the gradient flow.

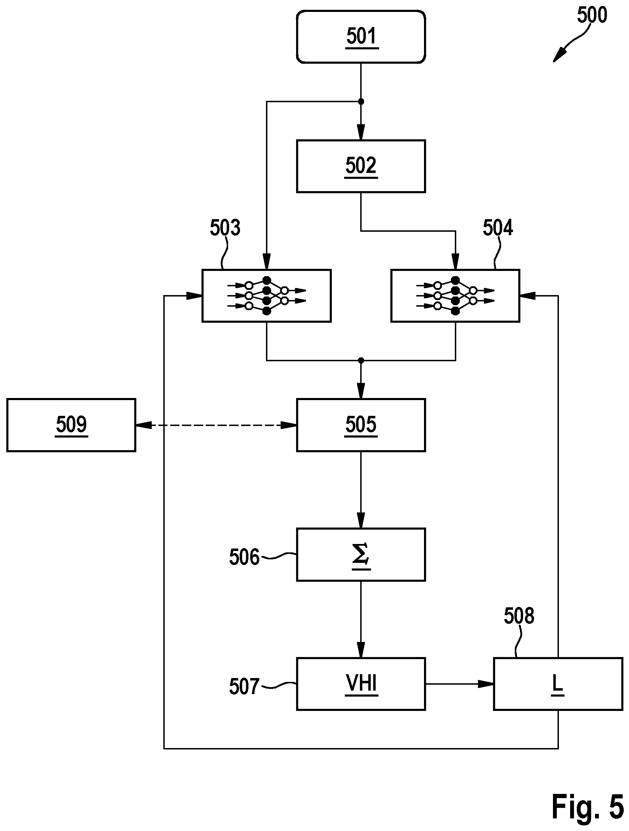

Figure 5 illustrates a VHI generator 500 used for health label generation 206, 303.

The VHI Generator 500 uses reconstruction errors for a time series (of the training set in training or of a machine whose RUL should be estimated) input 501 (also denoted as "raw anomaly").

In training, the VHI generator 500 learns machine specific degradation patterns by training two (small) neural networks 503, 504 named "k_anomaly_net" and "k_window_net", respectively. The training is guided by a (custom) loss function 508.

According to an embodiment, k_anomaly_net 503 is a small neural network consisting of two fully connected layers, which uses the reconstruction errors 501 directly. The second network, k_window_net 504, relies on the same input 501, but instead of directly using the reconstruction errors, non-overlapping window 502 are created within the input 501 (i.e. in the series of reconstruction errors corresponding to the time stamps of the respective time series) and k_window_net 504 averages the reconstruction errors inside each of these windows in order to represent the trend in specific regions. The window length is corresponding to the batch size used in the autoencoder to allow the model complete autonomy and avoid hard-coding in different scenarios. This way, even if there is an outlier in the raw anomaly 501 for a given data point, the window anomaly analysis by the k_window_net 504 looks at the neighbouring region and enriches the context for the respective window.

The unprocessed raw anomaly values are input to the first neural network 503, the processed window anomaly values are used as inputs to the second neural network 504. From deep learning perspective, both neural networks 503, 504 may have identical structures. According to various embodiments, each have two fully connected (FC) layers with a ReLU activation function in between these FC layers. As the inputs are scalar values for the data points, neural network increases the dimension from one to 16 in the first layer, uses nonlinear activation function and then reduces the dimension back to one in the second FC layer. A forward pass simply passes the correct inputs through the corresponding networks. According to one embodiment, a final sigmoid is used at the output of the second FC layer. It stabilizes the created VHIs, which require stability, to realistically represent slow but gradual wear in machinery.

The results of the processing by the two neural networks 503, 504 can thus be written as ${k}_{anomaly} \left(x\right) = σ \left({W}_{2}⋅ReLU\left({W}_{1}⋅x+{b}_{1}\right)+{b}_{2}\right)$ ${k}_{window} \left(y\right) = σ \left({W}_{2}^{′}⋅ReLU\left({W}_{1}^{′}⋅y+{b}_{1}^{′}\right)+{b}_{2}^{′}\right)$

These results, referred to as "K-values" in the following are then processed as follows to generate the VHI values.

In 505, a weighted sum is determined: the K-values are multiplied with their corresponding input scores, these two multiplication outputs are then added together. The result of this operation is denoted by "weighted_sum" as it effectively becomes a weighted sum of the original raw anomalies and window anomaly values, e.g. as follows:$weighted sum = k_anomaly \left(x\right) * x + k_window \left(y\right) * y$ where x is the reconstruction error for a current time stamp and y is the result of averaging over a current window.

In 506, the weighted sums are added in a cumulative manner. The result of this is called "cumulative_sum".

In 507, the VHI is calculated by subtracting the cumulative sum from the initial starting point of one. This is performed for each time step (i.e. time index of the respective time series) such that a VHI for each time step is generated.

Thus, with each pass (i.e. for each time step), due to the cumulative sum, the monotonic behaviour of the VHI Generator is guaranteed. Using sigmoid as well as a customised loss function 508 helps in further stabilizing the generated values.

According to various embodiments, the loss function 508 used for the training the VHI Generator has three components:
- Initialization penalty, strictly penalizes deviations from the scalar value of one for the very first VHI value, ensuring a healthy start.
- Stability penalty, takes the difference between neighbouring VHI pairs and penalizes their sum, ensuring smoothness and high stability, both of which are vital.
- Zero closeness penalty, in case of a trend during training, which makes values reach zero prematurely, this components penalizes values that get close to zero, ensuring that values getting low must truly be so, due to significant degradation in machinery.

These three components of the loss function 508 (used for training) can be written as follows. $init_penalty = {\left({vhi}_{0}-1\right)}^{2}$ $stability_penalty = {\left(\sum ReLU \left({vhi}_{i + 1}-{vhi}_{i}\right)\right)}^{2}$ $zero_closeness_penalty = \sum {\left(exp\left(-\frac{{vhi}_{i}}{0.1}\right)\right)}^{2}$

Table 1 gives an example of a time series that has been processed by both the autoencoder and the VHI Generator, where scaled acceleration values, raw anomaly, window anomaly and learned VHI values can be seen. It should be noted that VHI values successfully start from the initialization value of one and go slowly and monotonically down.

**Table 1**

| | acceleration | raw_anomaly | window_anomaly | VHI |
|---|---|---|---|---|
| 0 | 0.539893 | 0.001248 | 0.001256 | 1.000000 |
| 1 | 0.539208 | 0.001028 | 0.001256 | 1.000000 |
| 2 | 0.539991 | 0.001181 | 0.001256 | 1.000000 |
| 3 | 0.538230 | 0.001300 | 0.001256 | 1.000000 |
| 4 | 0.538328 | 0.001303 | 0.001256 | 1.000000 |
| ... | ... | ... | ... | ... |
| 6130195 | 0.541458 | 0.001257 | 0.001254 | 0.969102 |
| 6130196 | 0.539306 | 0.001233 | 0.001254 | 0.969102 |
| 6130197 | 0.536958 | 0.001228 | 0.001254 | 0.969102 |
| 6130193 | 0.539697 | 0.001273 | 0.001254 | 0.969102 |
| 6130199 | 0.543415 | 0.001287 | 0.001254 | 0.969102 |

According to various embodiments, a calibration mechanism 509 may be used for a certain time period (e.g. two weeks or a month), when first using the PdM framework on new machinery. This calibration mechanism allows the PdM model (e.g. the neural networks 503, 504) to get used to these new working conditions, where it will be run uninterrupted. In this way, regardless of how high or low the sampling rate of the sensors may be and regardless of how long a machine needs until parts needs to be replaced, the VHI generator 500 (including in particular networks 503, 504) can gather experience and therefore adapt its generated VHI values to be more accurate. This optimization step of the framework is possible with a simple introduction of an additional variable called "scaler_value", which is placed inside the forward pass, at the calculation of weighted sum. Its job is to scale the values of weighted sums. Initialized at one to have no effect, depending on the conditions of the machine, it accelerates or decreases the speed at which health degradations are reflected in the virtual health index (also denoted simply as "health index" herein).

The trained VHI Generator is used in evaluation mode (i.e. for inference) to generate health labels for new data points in live production, allowing degradations in VHI values to be represented in a precise way.

As explained above with reference to figure 2, in 207, various degradation levels (i.e. thresholds between multiple degradation levels in terms of VHI thresholds), in particular a RUL threshold, are determined.

There are two scenarios, either the historic data includes (sufficient) historic data including a failure event (or entry into a specific degradation range) with data available prior to the failure event or it does not. In the first case, the VHI values output by VHI generator for historic data (i.e. time series of the historic data) including failures (or entries into specific degradation ranges) can be used to defined VHI thresholds for the various degradation levels.

In the second case an unsupervised ML algorithm (corresponding to unsupervised clustering algorithm 208) may be used to define the thresholds, i.e. to find degradation groupings in the generated VHI values. In this way, three to five groups (i.e. degradation ranges) can be obtained, which represent various degradation levels. An example case with four groups could be labelled as: healthy, slight degradation, moderate degradation, and critical degradation. In this example, RUL could be set as the boundary right before the critical degradation phase (i.e. the RUL threshold is the boundary between moderate and critical degradation). Although less reliable compared to a real-life occurrence of failures (i.e. use of historic data according to the first case), this approach allows the PdM framework to function and operate even under low-intel scenarios, generating insights that can possibly be valuable and later be further improved.

Examples for the unsupervised clustering algorithm 208 are the K-Means clustering algorithm, a Gaussian Mixture Model and the DBSCAN (density-based spatial clustering of applications with noise) clustering algorithm. GMM assigns probabilities to clusters, i.e. gives a probability that a certain sample belongs to a certain cluster.

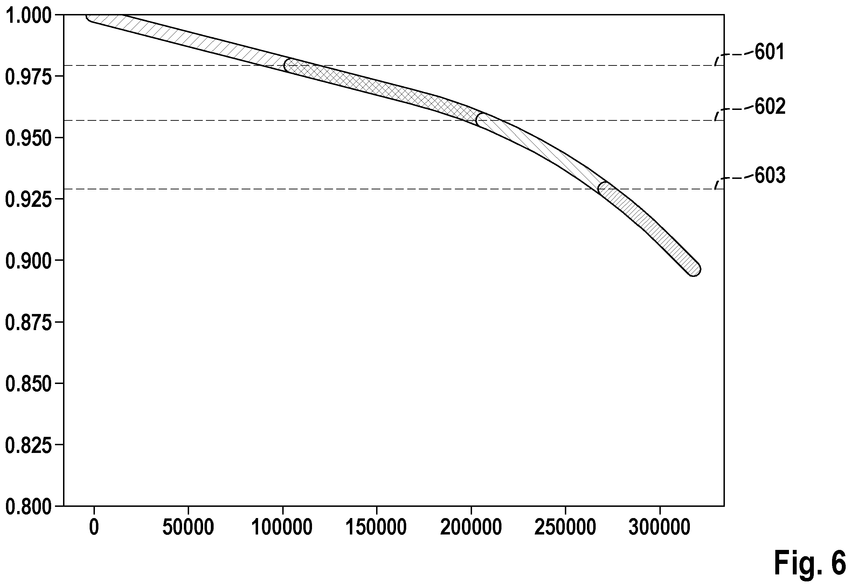

Figure 6 shows an example of VHI boundaries 601-603 between four degradation levels found using a GMM. At each boundary 601-603, the probability of belonging to either cluster (degradation level) is equal The lowest boundary 603 identifies the RUL threshold within the VHI values. This corresponds approximately to the area where moderate degradation becomes critical degradation.

In figure 6, the VHI value increases along the y-axis and the time steps are indicated along the x-axis.

An example for the VHI prediction model trained in 209 is Prophet which is an open-source time series forecasting tool originally developed by Facebook (Meta). It uses an additive regression technique, where it breaks the data into subcomponents such as trends, seasonality, holidays, and error terms. It offers further flexibility by allowing the user to add custom features, while remaining robust, handling the noise and outliers in the data. As the VHI values which the PdM framework needs to extend into the future consist only of the VHI values themselves, which is effectively a single column or feature, Prophet becomes a powerful candidate for the objective. According to one embodiment, when the framework is applied to manufacturing machinery, seasonality and holiday components are left out, further simplifying the VHI prediction model. The remaining components therefore are only the trend in the data, with the error terms alongside it.

The input of the prediction model (e.g. in the case Prophet is used) is a data frame with two columns, a timestamp one and the numerical target feature, which is the VHI in the present case. It should be noted that if historic data is healthy, Prophet cannot know how a pattern looks like when degradation starts kicking in. Being only trained on healthy data it will therefore be effectively only extending a healthy trend further into the future. The way to avoid this pitfall is by showing a declining VHI trend, either from a real-failure or from the injected noise, so that it sees in a machine-specific way how it should adapt its future predictions. Once this information is fed in (i.e. the VHI prediction model, Prophet in the present case, is trained), VHI values are determined from the current sensor data in evaluation mode (i.e. for inference) using the VHI generator and the VHI values are extended into the future using the trained prediction model. To keep feeding the VHI prediction model with more and updated information, incoming sensor data may be continuously used to generate further VHI values which are appended to the VHI values generated for the machine under consideration (i.e. for which the RUL should be determined), therefore providing the VHI prediction model a larger context to make predictions on. This ensures predicted VHI values to get more accurate as the sensor data matures.

In case the machine under consideration is healthy and reaching the RUL threshold is not foreseeable for a satisfactory amount of time, the RUL prediction may be set to automatically terminate based on an upper limit of time (i.e. a future time index). This upper limit can be selected as desired by the user, as different spare parts may require different times to acquire in production settings. While making sure that no RUL is reached within a few days may be sufficient for one user, for another, more value can be generated if a forecast of two weeks or longer can be provided. Therefore, the upper limit of forecast time range is left flexible for users' adjustments.

If the predicted VHI values do not meet the RUL threshold within the desired time range (i.e. before the time limit), this is the final output of the PdM framework for that case. However, in case the RUL threshold is met by the predicted VHI values, the RUL estimate is simply calculated how many time points there are until the predicted VHI values reach the RUL threshold. Effectively, this is subtraction of two values. A maintenance action can then be triggered depending on the estimated RUL, e.g. a machine or components of it are replaced, a machine is taken out of service, a safe mode is activated etc.

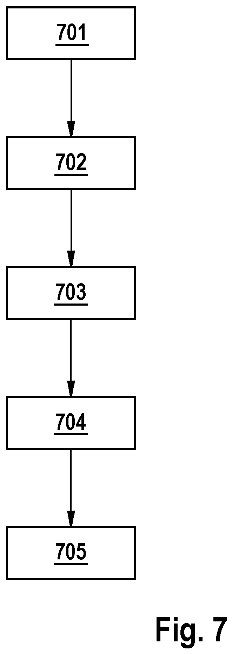

In summary, according to various embodiments, a method is provided as illustrated in figure 7.

Figure 7 shows a flow diagram 700 illustrating a method for estimating a lifetime indicator of a machine performing a given manufacturing process according to an embodiment. Estimating a lifetime indicator may be understood as estimating the time until an event related to the machine's lifetime takes place, e.g. until it fails or its operation quality drops between a certain level.

In 701, historic data which includes at least one historic data time series is received, wherein the at least one historic data time series is a time series of sensor data collected when performing the manufacturing process.

In 702, for the at least one historic data time series of the historic data, a training time series of health indices specifying a health of the respective machine is generated by applying an anomaly detector to the historic data time series and determining the health indices of the training time series of health indices from anomaly detection results of the anomaly detector using a health index generator.

In 703, ranges of health indices representing different degradation levels and one or more thresholds between one or more pairs of the degradation levels including a threshold representing end of useful life are generated.

In 704, a health index prediction model is trained to extend time series of health indices into the future using the generated training time series of health indices as training data.

In 705, for a machine performing the manufacturing process, the lifetime indicator of the machine is estimated from a time series of sensor data collected in the operation of the machine, by
- generating a time series of health indices for the machine from the time series of sensor data collected in the operation of the machine by applying the anomaly detector to the time series of sensor data collected in the operation of the machine and by using the health index generator
- extending the time series of health indices for the machine into the future using the trained health index prediction model and
- determining a lifetime indicator estimate for the machine from a point in time when the extended time series of health indices for the machine reaches the threshold representing end of useful life.

It should be noted that the order does not necessarily be as indicated in figure 7. In particular, the prediction model may be trained before or during the determination of the ranges and thresholds.

For example, a method for estimating a lifetime indicator (such as a remaining useful life) of a machine performing a given manufacturing process is provided, comprising receiving time-series data from the sensors on the machine collected during the operation of the machine. The data received is then passed to an anomaly detection engine (ADE) to understand the abnormalities in the behaviour of the machine. Here the pattern of normal behaviour of the machine is recognised by the engine and any deviations shows that the machine is undergoing wear-tear during its operation. The output of the ADE is health index of the machine signifying the trend of degradation. The method then comprises determining ranges of health indices representing different degradation levels including a final threshold representing machine requires maintenance as it has reached end of useful life and using the existing health indices, training a health index prediction model to extend time series of health indices into the future, therefore knowing when the machine would reach its remaining useful life.

It should be noted that the historic data may also be seen as training data for the PdM framework (i.e. the anomaly detector, the VHI generator etc.)

The approach of figure 7 can be used to compute a control signal for controlling a manufacturing machine-

Sensor data may include acceleration, pressure, force, etc. but also image data (i.e. digital images) from various visual sensors (cameras) such as video, radar, LiDAR, ultrasonic, thermal imaging, motion, sonar etc.

The method of Figure 7 may be performed by one or more data processing devices (e.g. computers or controllers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for estimating the lifetime indicator of a machine (100) performing a given manufacturing process, comprising:
Receiving (701) historic data which includes at least one historic data time series, which is a time series of sensor data collected when performing the manufacturing process;
Applying (702) an anomaly detector to at least one historic data time series of the historic data and generating a training time series of health indices specifying a health of the respective machine (100) from anomaly detection results of the anomaly detector using a health index generator (500);
Determining (703) ranges of health indices representing different degradation levels and one or more thresholds between one or more pairs of the degradation levels including a threshold (603) representing end of useful life;
Training (704) a health index prediction model to extend time series of health indices into the future using the generated training time series of health indices as training data;
Estimating (705), for a machine (100) performing the manufacturing process, the lifetime indicator of the machine (100) from a time series of sensor data collected in the operation of the machine (100), by
generating a time series of health indices for the machine (100) from the time series of sensor data collected in the operation of the machine (100) by applying the anomaly detector to the time series of sensor data collected in the operation of the machine(100) and by using the health index generator (500); extending the time series of health indices for the machine (100) into the future using the trained health index prediction model; and
determining a lifetime indicator estimate for the machine (100) from a point in time when the extended time series of health indices for the machine (100) reaches the threshold (603) representing end of useful life.

2. The method of claim 1, comprising determining the ranges of health indices representing different degradation levels from the generated time series of health indices by applying a machine learning clustering model.

3. The method of claim 1 or 2, comprising generating historic data time series of the historic data by injecting noise (401, 402) representative of degradation into time series of sensor data collected when performing the manufacturing process.

4. The method of any one of claims 1 to 3, wherein the health index generator (500) generates the health indices by changing an initial health index representing a healthy machine over time depending on the anomaly detection results.

5. The method of claim 4, wherein the health index generator (500) comprises a first neural network (503) processing an anomaly detection result of the anomaly detection for a current time index and a second neural network (504) processing anomaly detection results of the anomaly detection averaged over a predetermined window of time indices, combining outputs of the first neural network (503) and the second neural network (504) and determining a value of the health index for the current time index by changing a value of the health index from a preceding time index by a result of the combination.

6. The method of claim 5, comprising training the health index generator (500) by training the first neural network (503) and the second neural network (504) using a loss function including at least one of a penalty for deviations between subsequent health indices and health indices close to a health index representing maximum degradation.

7. The method of any one of claims 1 to 6, wherein the anomaly detector includes an auto-encoder (204, 205) and the results of the anomaly detector comprise reconstruction errors of the auto-encoder (204, 205).

8. The method of claim 7, wherein the auto-encoder is a temporal convolutional network auto encoder or a Long Short-Term Memory autoencoder.

9. A method for controlling a machine (100) comprising estimating a lifetime indicator of the machine (100) according to any one of claims 1 to 7 and applying a maintenance action to the machine (100) depending on the estimated lifetime indicator.

10. A data processing system, configured to perform a method of any one of claims 1 to 9.

11. A computer program comprising instructions which, when executed by a computer, makes the computer perform a method according to any one of claims 1 to 9.

12. A computer-readable medium comprising instructions which, when executed by a computer, makes the computer perform a method according to any one of claims 1 to 9.
